Europäisches Patentamt

European Patent Office

Office européen des brevets

(11) Publication number: **0 347 363**
**A1**

## (12) EUROPEAN PATENT APPLICATION

(21) Application number: **89600011.4**

(22) Date of filing: **15.05.89**

(51) Int. Cl.⁴: **B 63 B 1/40**

(30) Priority: **15.06.88 GR 88010382**

(43) Date of publication of application:
**20.12.89 Bulletin 89/51**

(84) Designated Contracting States:
**BE CH DE ES FR GB IT LI NL SE**

(71) Applicant: **Petromanolakis, Emmanuel E.**
**12, Pantokratoros Str.**
**GR-12 131 Peristeri Athens (GR)**

(72) Inventor: **Petromanolakis, Emmanuel E.**
**12, Pantokratoros Str.**
**GR-12 131 Peristeri Athens (GR)**

(54) **Arangement to decrease the propulsion resistance of a vessel.**

㊄ To decrease the propulsion resistance of a vessel, a conduct or system of conducts are installed on a vessel. The conducts start from the bow, near the water level, and ends at another location of the vessel i.e. at the bottom or the sides, near the end of the boundary layer.

Figure 1

Figure 2

Bundesdruckerei Berlin

Description

## Arrangement to decrease the propulsion resistance of a vessel.-

The invention refers to the hydrodynamic technical field and it concerns the installation of a conductor or a system or conductors,staring from the bow near the water level line and finishing at the aft end,there being -properly- shaped it feeds the propeller of a vessel.-

The technical level(previous technical knowledge) faces the propulsion problem of a vessel ,in order to-partially- decrease the wave resistance by installing a bulbous bow at fwd end or by a KORT-NOZLE on the propeller or by other rings ,installed on or fwd of the propeller directing -by this way- a better flow to the propeller.-

By the partial decrease of the wave resistance,the propulsion horsepower is reduced respectively and-consequetly- the fuel oil consumption.Therefore,the previous technical level has less dec crease on the propulsion resistance than the one being proposed by the invention and-consequently- more fuel oil consumption.-

The invention,by the two methods being mentioned below, obtains the biggest decrease of the wave resistence although the friction resistance is-partially- increased due to the additional flow inside the conductor or the conductors' system.-

Nevertheless ,the decrease of the wave resistence,as a total, is bigger- a fact that causes a considerable saving of fuels.-

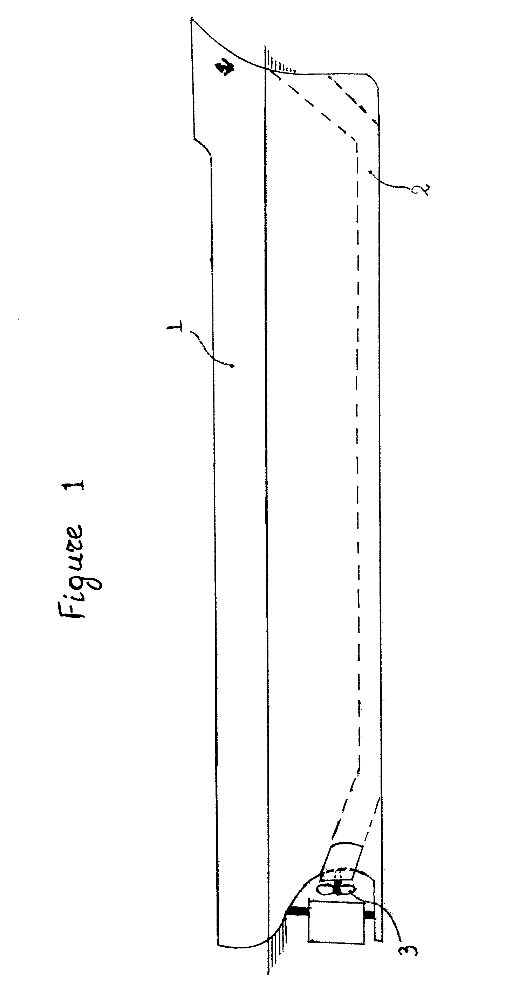

The invention concerns two ways of methods which can be applied and realizes as follows :
The first method(figure 1) of the invention concerns a conductor or a system of conductors which is installed on avessel,starting from the bow near the water level and,through the double bottom, depending on the kind of the vessel,it finishes at the aft end, taking into consideration the vessel's loading conditions.-

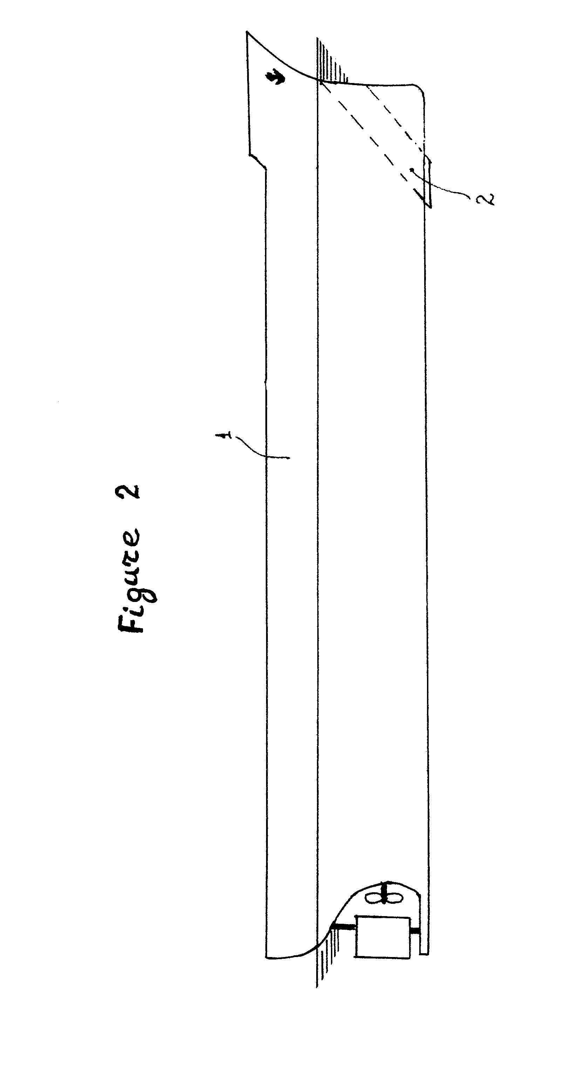

The other application method of the invention appears in figure 2,where a conductor or a sustem of conductors starts from the bow near the water level and finishes at another location of the vessel i.e at the bottom or at the sides ,near the end of the boundary layer.

Even in that case,there should be taken into consideration the loading conditions of the vessel,so that the proper reinforcement of the vessel be done.

So,the invention may be put-practically- into application ,in accordance with the afore mentioned two(2) basic methods and according to the ship's dimensions and the shipowners' intentions.-

The first application method of the invention is presented in figure 1 and it shows the vessel's "1" side view .A conductor or a system of conductors is constructed in the area of the water level and near it ( "2"),that continues through the double bottom(in the ships that there exists) and it finishes at the aft end of the vessel, feeding the propeller or propellers ="3" with sea water directly from the bow.- That is to say,the water that clashed against the bow and created the wave resistance(area of pressure is conveyed now to the aft end near the propeller(suction pressure or depression area),through the conductor or system of conductors and,thus,the wave resistance is reduced.- Therefore, the required horsepower of propulsion of the vessel is,also,reduced and-consequently- there occurs a reduction of the fuel oil consumption.

The second method is presented in figure "2" and it shows a side view of the vessel "1" with the conductor or the system of conductors,in the area of the water level "2", which finishes(end s) at the bottom or the sides of the vessel and near the end of the boundary layer.

This,the water that clashes against the bow,creating the resistan ce, is conveyed to the area of the depressure near the end of the boundary layer,through the conductor or the system of conductors.-

Therefore,the pressure of the clasing water is reduced and so is the wave resistance,a fact that results- as it has been,previously,stated- to the decrease of the fuel oil consumption.-

The size of the conductor or system of conductors depends on the size and speed of the vessel.-

The main parts of the invention are those being described below-at a corresponding enumeration of the figures(drawings) being attached to these presents- and are shown in an indicative,descriptive depiction.-

For the first way(method) of the invention,corresponding to figute 1.-

"1"- Side view of a vessel.-

"2"- Conductor or a system of conductors, properly shaped,that feeds the propeller from the area of the bow,-

"3"- Propeller or propellers(in case of two).-

For the second way(method) of the invention, corresponding to the figure " 2".-

1.- Side view of a vessel.-

2.- Conductor or a system of conductors,properly shaped,starting from the bow and finishing(ending) at the bottom or the sides,always under the water level.-

The invention can be applied at any,desirable,form,design or The figures(drawings),being attached to the present description, do not constitute a restrictive form of the invention but,simply,an indicative one.- Any other modification- that does not constitute a new invention and does not contain elements of a new invention, does not restrict the rights of the present invention. The construction of the invention is being realized by profile iron and steel plates , properly shaped to a conductor or to a system of conductors.- Their dimensions depend-proportionately- to the ship's dimensions and speed of propulsion ,being desired.

By the term "conductor piece" is not meant to be only the one of a circular section but that of any section and the transverse and the longitudinal(convergent or divergent).-

Through the said invention,the water pressure exercised on the bow of a vessel,during her movement, is equalized-as much as possible -by being connected with the conductor or the system of the conductors by the-relatively-lower pressure( than that of the bow) ,being created at the aft end or at other locations of the vessel,taking into consideration the existence of the boundary layer.

In the case that the conductor or the system of conductors ends at the aft end,it is being-properly-shaped so that the propeller or the propellers are feded,at a great percentage of water through the conductor(s) from the bow.-

This shaping of the conductor may,also,be combined with the placing of a ring in front or on the propeller or propellers for having the water flow directed towards the propeller or propellers.- When the conductor or the system of the conductors of the invention ends at the bottom or the sides of the vessel, the exis tence of the boundary layer is taken into consideration and the conductor or the system of the conductors will terminate near the end of the boundary layer.-

## Claims

1.-An arrangement to decrease the propulsion resistance of a vessel,which is composed of a conductor or system of conductrors, connecting the bow area,where an impact pressure of the water is exrecised with the aft,where a depressure appears because of the propeller or the propellers sunction. The installation of the conductor or the system of the conductors is being done near the water level,between the bow and the aft end and feeds,totally or partially, the propeller or propellers( in case of two) from the bow.-

2.- An arrangement to decrease the propulsion resistance of a vessel where a conductor or system of conductors is placed at the bow of a vessel,near the water level and ends at the bottom or at the sides near the end of the boundary layer.-

3.- An arrangement by using a conductor or system of conductors in accordance with the claims 1 or 2, which can be combined with the installation of a ring in front or on the propeller or propellers , for a better ditection of the water flow to the propeller or propellers of a vessel.-

Figure 1

Figure 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 300 977 (PUCCIONI) * Abstract; figures 1,2 * | 1 | B 63 B 1/40 |
| X | DE-C- 927 256 (GRUND) * Whole document * | 1,2 | |
| X | PATENT ABSTRACTS OF JAPAN, vol. 8, no. 174 (M-316)[1611], 10th August 1984; & JP-A-59 67 191 (MURAKAMI ZOUSENSHIYO K.K.) 16-04-1984 * Abstract * | 1,2 | |
| X | DE-A-3 628 252 (HERBRAND) * Abstract; figure 1 * | 1,2 | |
| X | DE-A-2 234 813 (ODAWARA) * Whole document * | 1,2 | |
| X | DE-A-1 813 611 (DINGEDAHL) * Whole document * | 1 | |

TECHNICAL FIELDS SEARCHED (Int. Cl.4)

B 63 B

The present search report has been drawn up for all claims

| Place of search | Date of completion of the search | Examiner |
|---|---|---|
| THE HAGUE | 19-09-1989 | DE SCHEPPER H.P.H. |